# FASCICULE DE BREVET EUROPEEN

(11) **EP 3 571 361 B1**
(45) Date de publication et mention de la délivrance du brevet: **07.06.2023**
(21) Numéro de dépôt: 18713310.3
(22) Date de dépôt: 05.03.2018
(51) Int. Cl.: E04F 15/10, E04F 15/18, E04F 15/20

(54) **PANNEAU ACOUSTIQUE POUR LA RÉALISATION D'UN REVÊTEMENT DE SOL ET SON PROCÉDÉ DE FABRICATION**
AKUSTISCHE VERKLEIDUNG ZUR HERSTELLUNG EINES BODENBELAGS UND IHR HERSTELLUNGSVERFAHREN
ACOUSTIC PANELLING FOR PRODUCING A FLOOR COVERING AND METHOD OF MANUFACTURING THEREOF

(30) Priorité: 06.03.2017 FR 1751767
(43) Date de publication de la demande: 27.11.2019
(73) Titulaire: GERFLOR, 69100 Villeurbanne (FR)
(72) Inventeur: CARPENTIER, Fabien, 84500 Bollène (FR); CRIONAY, Xavier, 84500 Bollène (FR)
(74) Mandataire: Cabinet Laurent & Charras
(86) Numéro de dépôt international: PCT/FR2018/050493
(87) Numéro de publication internationale: WO 2018/162828

(56) Documents cités:
- EP-A1- 1 938 963
- WO-A2-02/10504
- DE-U1-202015 100 411
- Verband Der Europäischen Laminatfussbodenhersteller E V: "EPLF Technical Bulletin 08/2014 - Underlay Materials under Laminate Floor Coverings - Test Standards and Performance Indicators", , 22 août 2014 (2014-08-22), XP055481598, England ISBN: 978-0-900246-19-7 Extrait de l'Internet: URL:https://www.eplf.com/sites/default/fil es/downloads/eplf.unterlagsmaterialien-tbu nderlays-2014-en.pdf [extrait le 2018-06-06]

## Description

### DOMAINE TECHNIQUE

La présente invention concerne le secteur technique des revêtements de sols et plus particulièrement un panneau de sol pour la réalisation d'un revêtement de sol ou similaire. Le panneau selon l'invention présente une forme de dalle ou de lame, est réalisé dans une matière plastique telle que le PVC et présente de bonnes propriétés acoustiques. La présente invention concerne également un procédé de réalisation d'un panneau acoustique pour la réalisation d'un revêtement de sol.

### ART ANTERIEUR

Il est bien connu de réaliser des revêtements de sols à partir d'éléments modulaires sous formes de lames ou de dalles. Leur fixation s'effectue usuellement par un assemblage en emboitement des lames ou des dalles présentant des moyens mâles-femelles de liaison ou d'assemblage. Leur pose est dite libre car ils sont généralement posés sans colles sur le sol, bien que dans certaines applications cela puisse être envisagé. De tels moyens mâles-femelles de liaison ou d'assemblage de panneaux sont notamment décrits dans les documents GB 2 256 023, EP 1 026 341, WO 2012/004701 ou encore WO 2016/030627.

Les revêtements de sol réalisés à partir de PVC, sous forme de lames ou de dalles comprenant de tels moyens mâles-femelles de liaison ou d'assemblage, également dénommés LVT pour « Luxury Vinyl Tile », sont particulièrement avantageux car ils permettent d'obtenir une gamme de décors très large, notamment des décors d'imitation parquet très réalistes, et restent de plus faciles à poser et à nettoyer tout en conservant de très bonnes propriétés de poinçonnement et de résistance au roulement.

Cependant, ce type de revêtement présente de faibles performances en matière d'isolation acoustique, la réduction des nuisances sonores étant pourtant une attente majeure des consommateurs.

Pour remédier à cet inconvénient, une solution pour améliorer l'isolation acoustique d'un revêtement de sol LVT, consiste à poser au préalable une sous-couche isolante et de poser par-dessus les panneaux à assembler. Cette méthode est cependant fastidieuse car elle augmente le nombre de découpes nécessaires et complexifie la pose. La plupart de ces sous-couches doivent également être adhésivées au sol avant la pose des panneaux à assembler pour ne pas glisser sur le sol pendant la pose.

Une autre solution consiste à intégrer une sous-couche moussée aux dalles ou aux lames. Le brevet US 8,893,850 B2 propose notamment l'utilisation de mousse de polyuréthane et de caoutchouc comme matériau constituant une sous-couche de panneau de sol. La mousse utilisée à cependant tendance à fortement fragiliser la résistance des moyens mâles-femelles de liaison dans le temps. Les mousses s'écrasent également au fil du temps et perdent leur faculté à reprendre leur forme, ce qui engendre des décalages de positionnement entre plusieurs lames contiguës et des pertes de propriétés d'isolation acoustique. D'autre part, ce type de sous-couche dégrade les résultats de poinçonnement et de résistance au roulement des revêtements de sol posés. Le document EP1938963 illustre aussi un panneau de ce type.

XP055481598, "EPLF Technical Bulletin 08/2014 - Underlay Materials under Laminate Floor Coverings - Test Standards and Performance Indicators", chapitre "CS and CC: Requirements with static loads" adresse le même problème et recommande des niveaux de résistance à la compression pour des sous-couches de recouvrement de sol, selon le cas, d'au moins 2, 10, 20 ou 60Kpa. WO0210504A2 divulgue un panneau multicouche comprenant une sous-couche de textile non-tissé destinée à être en contact avec le sol pour améliorer l'isolation acoustique et présentant une épaisseur comprise entre 0,5 mm et 5 mm. Une résistance à la compression d'au moins 20Kpa n'est pas divulguée.

DE202015100411U1 divulgue une sous couche similaire, mais ne divulgue pas non plus de résistance à la compression d'au moins 20Kpa.

### EXPOSE DE L'INVENTION

L'un des buts de l'invention est donc de proposer un panneau de sol pour la réalisation d'un revêtement de sol ou similaire comprenant des moyens mâles-femelles de liaison ou d'assemblage et présentant de bonnes performances en matière d'isolation acoustique tout en conservant une bonne résistance des moyens mâles-femelles de liaison ou d'assemblages et une bonne résistance au poinçonnement et au roulement dans le temps.

Un des objectifs de l'invention est notamment de proposer un panneau de sol pour la réalisation d'un revêtement de sol ayant de bonne performance en isolation acoustique, notamment d'atténuation des bruits d'impacts, selon la norme EN ISO 10140-3.

Un autre objectif est également de proposer un panneau de sol efficace pour l'atténuation des bruits d'impact à l'intérieur de la pièce où ils sont créés. Cette mesure se fait en même temps que la mesure d'isolation acoustique grâce à un microphone mesurant le niveau de bruit dans la pièce selon la norme NF EN 16205 Août 2013, définissant les mesures en laboratoire des bruit de choc dans une salle par les revêtements de sol posés dans cette salle.

Un autre objectif est de proposer un panneau de sol résistant à un passage de 25000 cycles minimum d'une chaise à roulettes double bandes tel que défini dans la norme ISO 4918 ou NF EN 425.

Un autre objectif est de proposer un panneau de sol classé P3 selon le classement UPEC, notamment présentant une valeur de poinçonnement inférieure ou égale à 0,20mm, préférentiellement inférieure ou égale 0,15 mm entre deux mesures de valeur de poinçonnement statique rémanent réalisées selon la norme NF EN 433.

Enfin, un autre objectif est de proposer un panneau de sol résistant au trafic tout en conservant de bonnes propriétés d'isolation acoustique dans la durée.

A cet effet, il est proposé un panneau multicouche pour la réalisation d'un revêtement de sol présentant des propriétés d'isolation acoustique, dont au moins l'une des couches est réalisée à partir de PVC, ledit panneau comprenant des moyens mâles-femelles de liaison ou d'assemblage de plusieurs panneaux entre eux, ledit panneau comprenant au moins une couche décor liée à une couche d'envers , la couche d'envers étant liée à une sous-couche de textile non-tissé, destinée à être en contact avec le sol, et présentant une épaisseur comprise entre 0,5 mm et 3 mm.

L'intérêt d'une telle sous-couche est d'apporter au panneau selon l'invention, de bonnes performances d'isolation acoustique, tout en permettant aux moyens mâles-femelles d'assemblage de bien résister au trafic. Une épaisseur comprise entre 0,5 mm et 3 mm permet en effet de garantir une bon compromis entre les performances d'isolation acoustique, et la résistance de moyens mâles-femmes d'assemblage au trafic et ce pour la plupart des profils d'usinage de ces moyens d'assemblages. Il se peut en effet que des moyens mâles-femmes assemblages utilisés en combinaison avec un textile non-tissé d'une épaisseur supérieure à 3 mm se désassemblent ou cassent sous l'effet du trafic, l'épaisseur du textile non-tissé rendant l'ensemble du panneau trop souple et augmentant les contraintes sur les moyens d'assemblage. D'autre part une épaisseur de non-tissé inférieure à 0,5 mm peut limiter l'isolation acoustique apportée par le panneau.

Les textiles non-tissés pouvant être utilisés selon l'invention sont notamment des textiles non-tissés obtenus selon toutes voies connues : sèche, humide, airlaid ou fondue, avantageusement liés par un liage mécanique (aiguilletage, jet d'eau,...) chimique (latex) ou thermique (calandrage, passage sous air chaud,...) afin d'améliorer la tenue des fibres entre-elles et de conserver de bonnes propriétés acoustiques et mécaniques dans le temps.

Avantageusement, la sous-couche de textile non-tissé présente une épaisseur comprise entre 1 mm et 2,5 mm. Cette gamme d'épaisseur permet d'atteindre un meilleur compromis entre les performances d'isolation acoustique et résistance des moyens d'assemblage au trafic, notamment une atténuation acoustique selon la norme ISO 10140-3 supérieure à 15dB et une valeur de poinçonnement inférieure ou égale à 0,15mm.

Selon l'invention, la sous-couche de textile non-tissé comprend une résistance à la compression supérieure ou égale à 20Kpa, plus préférentiellement supérieure ou égale à 100KPa. La résistance à la compression est une propriété importante de la sous-couche, celle-ci est déterminante pour conserver une bonne isolation acoustique dans le temps apportée par la sous-couche tout en contribuant à la résistance des moyens d'assemblage au trafic. La résistance à la compression est mesurée selon la norme CEN / TS 16354 :2012 qui fait elle-même référence à la norme NF EN 826 de mai 2013. Cette méthode correspond à une mesure de la compression pour une déformation de 0,5mm.

Une sous-couche de textile non-tissé comprenant une résistance à la compression supérieure ou égale à 20Kpa permet d'apporter une bonne isolation acoustique tout en contribuant à la résistance des moyens d'assemblage au trafic. Cependant, lorsque le revêtement est soumis à un trafic important, notamment dans des halls d'accueil ou des couloirs, il est préférable que la sous-couche de textile non-tissé comprenne une résistance à la compression supérieure ou égale à 100Kpa afin de maintenir ses propriétés acoustiques dans le temps.

Plus préférentiellement, la sous-couche de textile non-tissé comprend une résistance à la compression supérieure ou égale à 400KPa. Ceci permet d'atteindre un meilleur résultat à la fois pour la conservation des performances d'isolation acoustique dans le temps et la résistance des moyens d'assemblage au trafic. Il est en effet observé qu'une résistance à la compression supérieure ou égale à 400KPa permet à la sous-couche de conserver son épaisseur malgré un trafic répété de charges lourdes et créé moins de contrainte au niveau des moyens d'assemblages. Il est par exemple observé que les moyens d'assemblage ayant une direction d'assemblage dite « verticale » à savoir perpendiculaire au plan du sol recouvert par le panneau de revêtement de sol présentent moins de risques de déclipsage si ils sont utilisés en combinaison avec une sous-couche de textile non-tissé comprenant une résistance à la compression supérieure ou égale à 400KPa.

Avantageusement, la sous-couche de textile non-tissé comprend des fibres naturelles telles que des fibres de cellulose, de coton, de lin, des fibres synthétiques, notamment des fibres de polyester, de polyamide, de polyéthylène téréphtalate, d'aramide, de Nomex, de polynaphtalate d'éthylène, de polypropylène ou encore des fibres minérales synthétiques telles que des fibres de verre ou des fibres de basalte.

Avantageusement, le textile non-tissé est réalisé à partir d'un mélange de fibres naturelles et de fibres synthétiques et/ou de fibres minérales synthétiques. De façon non-limitative, la sous-couche de textile non-tissé présente une masse surfacique supérieure à 100g/m². De façon non-limitative, dans la sous-couche de textile non-tissé, le ratio de la masse surfacique, prise en g/m², sur l'épaisseur, prise en mm, est supérieur à 200.

Les panneaux selon l'invention et notamment la couche d'envers sont assez rigides pour que des moyens d'assemblage mâles-femelles puissent être usinés, formé par injection moulage ou découpés sur leurs bords et que leur assemblage permettent un blocage des panneaux entre eux dans des conditions normales d'utilisation, ce blocage empêchant les panneaux d'être désassemblés dans au moins une direction. De façon préférentielle, le panneau selon l'invention et plus particulièrement la couche d'envers du panneau, présente une raideur à la flexion supérieure à la raideur à la flexion maximale permettant de satisfaire la Norme internationale ISO 24344:2008. C'est-à-dire qu'un panneau ou la couche d'envers d'un panneau selon l'invention soumis à ce test présenterait des ruptures, fissurations, craquelures et autres défauts permanents. Il est en effet important, notamment pour faciliter la pose des panneaux selon l'invention, que ceux-ci soient non-flexibles. Le terme "non-flexible" signifie notamment que le panneau selon l'invention ne se déforme pas de manière conséquente sous son propre poids lorsque celui-ci est tenu par un utilisateur à un bord. Le terme "non -flexible" est notamment défini par une méthode décrite par exemple dans ISO DIS 10581:2011 ou dans la norme ISO 24344:2008. Dans cette méthode, la flexibilité est définie par la capacité d'un panneau ou d'une couche d'un revêtement de sol à être enroulé autour d'un mandrin de 20 mm, sans que des fissures ou des craquelures ne se forment. Il est également important que la raideur à la flexion du panneau et notamment de la couche d'envers soit suffisamment importante pour que des moyens d'assemblage males-femelles puissent y être usinés et que ceux-ci puissent être assemblés. La raideur à la flexion dépend de chacune des couches du panneau selon l'invention, l'homme du métier étant à même de définir les différentes compositions et épaisseurs des couches pour atteindre la rigidité attendue.

L'invention concerne également un procédé de fabrication d'un panneau multicouche comprenant des moyens mâles-femelles de liaison ou d'assemblage de plusieurs panneaux entre eux pour la réalisation d'un revêtement de sol présentant des propriétés d'isolation acoustique, ce procédé comprenant au moins des étapes qui consistent à :
- lier ensemble, et dans cet ordre, au moins une couche décor (2), une couche d'envers (3) et une sous-couche (4) de textile non-tissé, ladite sous-couche (4) de textile étant destinée à être en contact avec le sol et présente une épaisseur comprise entre 0,5 mm et 3 mm, et au moins l'une des couches est réalisée à partir de PVC ;
- usiner les moyens mâles-femelles de liaison ou d'assemblage au niveau des bords du panneau permettant d'assembler plusieurs panneaux entre eux.

Selon l'invention, la sous-couche de textile utilisée dans le procédé selon l'invention présente une résistance à la compression, mesurée selon la norme CEN / TS 16354 :2012 qui fait elle-même référence à la norme NF EN 826, supérieure ou égale à 20Kpa, préférentiellement supérieure ou égale à 100KPa, préférentiellement supérieure ou égale à 400Kpa.

Avantageusement, la sous-couche de textile utilisée dans le procédé selon l'invention présente une masse surfacique supérieure à 100 g/m².

Avantageusement, la sous-couche de textile est liée à la couche d'envers par calandrage, collage à froid, collage à chaud, extrusion de la couche d'envers sur la sous-couche, ou par poudrage de colle thermofusible.

Avantageusement, le procédé selon l'invention comprend une étape consistant à calandrer la sous-couche de textile de manière à homogénéiser son épaisseur, avant de lier ladite sous-couche de textile à la couche d'envers. Les textiles non-tissés pouvant présenter une épaisseur très variable sur leur surface, cette étape supplémentaire permet de les compresser légèrement afin d'homogénéiser leur épaisseur et de garantir un même comportement mécanique sur toute la surface.

Les charges pouvant être utilisées sont notamment des charges inorganiques, par exemple des argiles, de la silice, du kaolin, du talc, du carbonate de calcium.

Les plastifiants liquides pouvant être utilisés sont notamment les plastifiants tels que le Diisononyl Phtalate (DINP), le Diisodecyl Phtalate (DIDP), le 2-Ethylhexyl Diphényle Phosphate (DPO), le Téréphtalate dioctylique (DOTP), le 1,2-cyclohexane dicarboxylique acide diisononyl ester (DINCH), les plastifiants de la famille des benzoates, les plastifiants de la famille des adipates, les plastifiants commercialisés sous la Marque PEVALEN^{®} par la société Perstorp, l'huile de soja epoxydée (HSE), les plastifiants totalement ou partiellement biosourcés comme par exemple les plastifiants de la gamme polysorb^{®} ID 37 commercialisés par la société Roquette Pharma, les plastifiants de la gamme citrofol commercialisés par la société Jungbunzlauer International AG, ou encore les plastifiants de la gamme soft-n-safe commercialisés par la société Danisco.

Les panneaux selon l'invention se présentent sous la forme de lames ou de dalles, chaque panneau comprenant une face supérieure destinée à être en contact avec l'utilisateur, une face inférieure destinée à être en contact avec le sol et quatre bords. Les bords des panneaux selon l'invention sont usinés pour présenter des moyens d'assemblage mâles-femelles permettant de relier plusieurs panneaux entre eux. Par moyens d'assemblage mâles-femelles, on entend notamment des moyens comprenant une rainure usinée sur un des bords d'un panneau et configurée pour s'assembler avec une languette usinée sur le bord opposé d'un panneau voisin. De façon générale, les moyens d'assemblage mâles-femelles comprennent un premier profil d'usinage usiné sur un bord d'un panneau et configuré pour s'assembler à un second profil d'usinage usiné sur un bord opposé d'un panneau voisin. Les panneaux ainsi obtenus présentent généralement deux paires de profil d'usinage, chaque paire comprenant un premier et un second profil d'usinage sur deux bords opposés d'un panneau. Les premier et second profils d'usinage de chaque paire ne sont pas forcément similaires, notamment en fonction de la longueur du bord considéré et de la direction d'assemblage désirée. L'assemblage des panneaux peut notamment s'effectuer dans une direction perpendiculaire au sol dans le cas de moyens d'assemblages dits « verticaux », dans une direction parallèle au sol dans le cas de moyens d'assemblage dits « horizontaux », ou encore dans des directions plus complexes, par exemple par rotation et/ou translation d'un moyen d'assemblage mâle dans un moyen d'assemblage femelle. De tels moyens d'assemblage sont notamment décrits dans les documents GB 2 256 023, EP 1 026 341, WO 2012/004701 ou encore WO 2016/030627. De façon préférentielle, les moyens d'assemblage une fois assemblés bloquent le déplacement de deux panneaux à la fois dans une direction verticale, c'est-à-dire perpendiculaire au sol, et dans une direction qui est perpendiculaire au bord du panneau sur lequel le moyen d'assemblage considéré est usiné et parallèle au plan formé par le sol. Les moyens d'assemblage et leurs profils d'usinage peuvent notamment être obtenus par usinage en ligne, par injection moulage du panneau ou encore par découpe, notamment à l'emporte-pièce.

Les panneaux selon l'invention présentent une épaisseur généralement comprise entre 3mm et 10mm, préférentiellement entre 4mm et 6mm. Cette épaisseur est mesurée entre la face supérieure destinée à être en contact avec l'utilisateur et la face inférieure destinée à être en contact avec le sol. Les panneaux selon l'invention présentent une largeur comprise entre 8 cm et 60 cm, de préférence entre 15 cm et 25 cm et une longueur comprise entre 80 cm et 240 cm, de préférence entre 100 et 150 cm.

La sous-couche réalisée à partir d'un textile non-tissé peut notamment être liée à la couche d'envers par collage à froid ou à chaud, par poudrage de colle tel que défini dans le brevet EP 1570 920 B1 du demandeur, notamment par poudrage de colle polyester, co-polyester ou EVA (éthylène vinyle acétate), par l'utilisation d'un adhésif double-face ou encore par thermocollage.

De façon non limitative, les panneaux selon l'invention pourront être grainés et/ou recouvert d'un vernis en surface, notamment afin de faciliter leur entretien et de les protéger contre l'usure.

### DESCRIPTION SOMMAIRE DES FIGURES

D'autres avantages et caractéristiques ressortiront mieux de la description qui va suivre, donnée à titre d'exemple non limitatif, en référence à l'unique figure annexée qui illustre, de manière schématique, une vue en coupe d'un revêtement de sol selon l'invention.

### DESCRIPTION DETAILLEE DE L'INVENTION

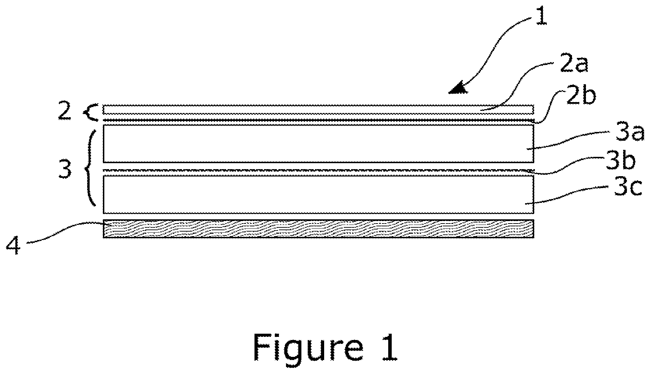

En référence à la figure 1, le revêtement de sol (1) selon l'invention comprend :
- une couche décor (2) ;
- une couche d'envers (3)
- une sous-couche réalisée dans un textile non-tissé (4).

La couche décor (2) est par exemple constituée d'une couche d'usure transparente, par exemple réalisée à partir de PVC plastifié non chargé (2a) et d'un film décor (2b). La couche décor (2) peut également être obtenue à partir de granulés réalisés à partir de PVC puis pressé ou encore par enduction de plastisol, par extrusion en filière plate ou par calandrage.

La couche d'envers (3) est par exemple constituée d'une première couche réalisée à partir de PVC (3a) destinée à être liée à la couche décor (2), d'une seconde couche (3c) destinée à être liée à la sous-couche (4) et d'une armature de renfort (3b) liée entre la première couche (3a) et la seconde couche (3c). Les couches (3a) et (3c) sont par exemples obtenues à partir de PVC plastifié, chargé et formée par calandrage. La couche d'envers (3) peut également être obtenue à partir de granulés réalisés à partir de PVC puis pressé ou encore par enduction de plastisol, par extrusion en filière plate. La réalisation de cette couche par calandrage reste néanmoins sont mode de fabrication préféré en terme de coût et de performances mécaniques obtenues. L'armature de renfort est notamment obtenue à partir d'un voile de verre, d'une grille de verre ou d'un complexe comprenant un voile et une grille de verre liés.

### EXEMPLE 1

Afin de réaliser des essais, acoustiques et mécaniques, des lames de LVT sont préparées. Ces lames sont constituées :
- De deux couches d'envers (3a, 3c) à base de PVC plastifié comprenant de la charge. La couche (3a) comprenant également des particules de fibre de verre pour apporter une bonne stabilité dimensionnelle à la lame.
- Un film décor imprimé (2b) en PVC.
- Une couche d'usure transparente en PVC plastifié non chargé (2a) qui protège le film imprimé en PVC.
- Un traitement en polyuréthane en surface de la couche d'usure transparente (non représenté).

Les compositions et caractéristiques des couches (2a, 3a, 3c) et film imprimé (2b) correspondent au produit commercialisé sous le nom type Création 55 Insight Clic System par la demanderesse La première couche (3a) comprend environ 33% de PVC, 10% de plastifiants (DINP), 4% d'additifs (aides-procédé, stabilisants, pigments), 3 % de particules de PVC mélangées à des fibres de verre et 50% de charges. La seconde couche (3b) comprend environ 33% de PVC, 10% de plastifiants (DINP), 4% d'additifs (aides-procédé, stabilisants, pigments) et 55% de charges.

De façon générale, une couche d'envers (3) selon l'invention peut être obtenue avec une composition comprenant environ 30% de PVC, environ 10% de plastifiants, environ 5% d'additifs (aides-procédé, stabilisants, pigments) et environ 55% de charges.

Des moyens mâles-femelles de liaison ou d'assemblage permettant d'assembler plusieurs panneaux sont usinés dans les couches d'envers (3a, 3c). Ces moyens permettent d'assembler les lames dans une direction perpendiculaire au sol et sont décrit dans la demande de brevet WO 2016/030627 du demandeur dont le contenu est incorporé dans la présente demande.

Afin d'évaluer l'intérêt acoustique des panneaux selon l'invention, une sous-couche (4) en textile non-tissé est complexée en envers de la seconde couche (3c). Le complexage est réalisé à l'aide d'un film adhésif double face. D'autres méthodes de complexage sont possibles tel que le pré-encollage du non-tissé par poudrage d'une colle thermofusible, le collage avec une colle acrylique ou encore le collage avec un colle thermofusible.

Trois sous-couches différentes dont les caractéristiques sont détaillées dans le tableau ci-dessous sont liées aux couches d'envers (3c) de différents panneaux ainsi formés. Les sous couches SC-01 et SC-02 sont réalisées dans des textiles non-tissés selon l'invention, la sous-couche SC-03 est une mousse polyoléfine utilisée comme référence.

| **N° de sous-couche** | **Epaisseur** | **Type** | **Matériau** | **masse surfacique** | **Résistance à la compression (CEN / TS 16354 :2012)** |
|---|---|---|---|---|---|
| SC-01 | 1mm | Non Tissé aiguilleté calandré, thermofixé et thermolié | Fibres Polyester. 200 g/m² de fibres Enduite de 20 g/m² de poudre Co-Polyester | 220 g/m² | ≥100KPa |
| SC-02 | 0,93mm | Non Tissé aiguilleté | Fibres Polyester | 227 g/m² | 400KPa +/- 10% |
| SC-03 (référence) | 1,5mm | mousse | Mousse polyoléfine à cellules fermées, physiquement réticulées, laminée avec une feuille de polyoléfine | 344 g/m² | ≥ 400KPa |

Les panneaux selon l'invention ainsi obtenus sont d'abord soumis à un premier essai de machine à chocs pour connaître la valeur de l'atténuation des bruits d'impact du produit avant trafic, c'est-à-dire avant usure. Les panneaux passent ensuite à l'essai de chaise à roulettes fixée par la norme NF EN 425 (ou ISO 4918) pour observer des phénomènes de casse ou de délamination entre les couches. L'objectif est ici d'observer le comportement des propriétés d'isolation acoustique en fonction du nombre de cycles de chaise à roulettes endurés. Le test de la chaise à roulette est poussé jusqu'à 35000 cycles s'il n'y a toujours pas de détérioration.

Après passage à la chaise à roulettes, il est réalisé un second test acoustique pour vérifier la tenue des propriétés acoustiques après trafic, après usure. Pour cela, il faut que les panneaux n'aient pas été détériorés (pas de casse des moyens d'assemblages mâles-femelles ni de délaminations entre les différentes couches de la lame). Un test acoustique est réalisé sur les panneaux à partir de 15000 cycles de chaise à roulettes, puis après 20000 cycles, 25000 cycles et 30000 cycles.

Un test de poinçonnement est également réalisé sur un échantillon de lame selon l'invention non exposé à un trafic de chaise à roulettes.

| **N° de sous-couche** | **Isolation acoustiq ue à 0 cycles (dB) - EN ISO 10140-3** | **Sonorité à la marche #1 (dB) - NF EN 16205** | **Isolation acoustique à 15000 cycles (dB) - EN ISO 10140-3** | **Sonorité à la marche #2 (dB) - NF EN 16205** | **Isolation acoustique à 20000 cycles (dB) - EN ISO 10140-3** | **Isolation acoustique 25000 cycles (dB) - EN ISO 10140-3** | **>35000 cycles** | **Poinçonn ement (mm)** |
|---|---|---|---|---|---|---|---|---|
| SC-01 | 18 | 71 dB | 17 | 71 dB | 17 | NC | casse des moyens d'assembl âge | 0,13 |
| SC-02 | 15 | 72 dB | 14 | 74 dB | 14 | casse des moyens d'assemblag e | | 0,13 |
| SC-03 | 16 | 69 dB | 15 | 72 dB | casse des moyens d'assemblag e | | | 0,2 |

Ce tableau permet de montrer que les sous-couches SC-01 et SC-02 selon l'invention conservent de bonnes performances d'isolation acoustique et de sonorité à la marche, et ce même après plus de 20000 cycles voire 25000 cycles de chaise à roulette, tout en préservant la tenue des moyens d'assemblage des panneaux. La résistance à la compression des sous-couches de textile non-tissé est également un facteur important, une résistance à la compression supérieure à 100Kpa, avantageusement supérieure à 400Kpa permet d'améliorer la résistance des moyens d'assemblage dans le temps et de conserver de bonnes performances d'isolation acoustique et de sonorité à la marche. Les tests de chaise à roulettes montrent que les panneaux selon l'invention présentent également de bons résultats et assurent une meilleure résistance des moyens d'assemblage dans le temps, notamment en comparaison avec une sous-couche mousse. Les valeurs des tests de poinçonnement sont également comparables avec des panneaux équivalents sans sous-couche et significativement meilleurs que les résultats de panneau sur sous-couche mousse.

### EXEMPLE 2

Afin d'évaluer l'impact du ratio de la masse surfacique de la sous-couche sur son épaisseur, les sous couche SC-01 et SC-02 ainsi que quatre sous-couches supplémentaires SC-04 à SC-07 sont liées aux couches d'envers (3c) de différents panneaux similaires à ceux de l'exemple 1 afin de former des panneaux selon l'invention. Les sous couches SC-04 à SC-07 sont réalisées à partir de textiles non-tissés selon l'invention. Leurs épaisseurs et leurs masses surfaciques sont données dans le tableau ci-dessous.

Les panneaux ainsi formés passent ensuite à l'essai de chaise à roulettes fixé par la norme NF EN 425 (ou ISO 4918) pour observer des phénomènes de casse des moyens d'assemblage ou de délamination entre les couches.

| **N° de sous couche** | **masse surfacique (g/m²)** | **épaisseur (mm)** | **Nombre de cycles de chaise à roulettes avant casse des moyens d'assemblage** | **ratio masse surfacique/épaisseur** |
|---|---|---|---|---|
| SC-01 | 220 | 1 | >30000 | 220 |
| SC-02 | 227 | 0,93 | >20000 | 244 |
| SC-04 | 300 | 0,87 | >30000 | 344 |
| SC-05 | 268 | 1,05 | >30000 | 255 |
| SC-06 | 308 | 1,66 | <15000 | 185 |
| SC-07 | 300 | 1,8 | <15000 | 166 |

Il est ainsi observé que le ratio entre la masse surfacique de la sous couche et son épaisseur doit être supérieure à 200 g/m² par millimètre d'épaisseur de la sous-couche de textile non-tissé pour améliorer le nombre de cycles de chaises à roulettes pouvant être supportés par le revêtement. Ceci permet notamment de supporter plus de 15000 cycles de chaise à roulette. Une augmentation de l'épaisseur de la sous couche textile non-tissé, pour améliorer l'atténuation acoustique, doit ainsi être compensée par une augmentation de sa masse surfacique de manière à ne pas créer trop de contraintes mécaniques sur les moyens d'assemblage. Le respect de ce ratio est notamment très important lorsque la couche d'envers comprend au moins une couche en PVC plastifié, notamment une couche non-flexible.

## Revendications

1. Panneau multicouche pour la réalisation d'un revêtement de sol présentant des propriétés d'isolation acoustique, dont au moins l'une des couches est réalisée à partir de PVC, ledit panneau comprenant des moyens mâles-femelles de liaison ou d'assemblage de plusieurs panneaux entre eux, ledit panneau comprenant au moins une couche décor (2) liée à une couche d'envers (3) ***caractérisé en ce que*** la couche d'envers (3) est liée à une sous-couche (4) de textile non-tissé, destinée à être en contact avec le sol, et présentant une épaisseur comprise entre 0,5 mm et 3 mm, et une résistance à la compression, mesurée selon la norme CEN / TS 16354 :2012 qui fait elle-même référence à la norme NF EN 826, qui est supérieure ou égale à 20Kpa.

2. Panneau selon la revendication 1, dans lequel la sous-couche (4) de textile non-tissé présente une épaisseur comprise entre 1 mm et 2,5 mm.

3. Panneau selon la revendication 2, dans lequel la sous-couche (4) de textile non-tissé comprend une résistance à la compression qui est supérieure ou égale à 100KPa.

4. Panneau selon la revendication 3, dans lequel la sous-couche (4) de textile non-tissé comprend une résistance à la compression qui est supérieure ou égale à 400KPa.

5. Panneau selon la revendication 1, dans lequel la sous-couche (4) de textile non-tissé comprend des fibres naturelles, synthétiques ou minérales synthétiques.

6. Panneau selon la revendication 5, dans lequel la sous-couche (4) de textile non-tissé comprend des fibres de polyester ou des fibres de polypropylène.

7. Panneau selon la revendication 1, dans lequel la sous-couche (4) de textile non-tissé présente une masse surfacique supérieure à 100g/m².

8. Panneau selon la revendication 1, dans lequel dans la sous-couche (4) de textile non-tissé, le ratio de la masse surfacique, prise en g/m², sur l'épaisseur, prise en mm, est supérieur à 200.

9. Procédé de fabrication d'un panneau multicouche comprenant des moyens mâles-femelles de liaison ou d'assemblage de plusieurs panneaux entre eux pour la réalisation d'un revêtement de sol présentant des propriétés d'isolation acoustique, ***caractérisé en ce qu'***il comprend au moins des étapes consistant à :
- lier ensemble, et dans cet ordre, au moins une couche décor (2), une couche d'envers (3) et une sous-couche (4) de textile non-tissé, ladite sous-couche (4) de textile étant destinée à être en contact avec le sol et présente une épaisseur comprise entre 0,5 mm et 3 mm et une résistance à la compression, mesurée selon la norme CEN / TS 16354 :2012 qui fait elle-même référence à la norme NF EN 826, qui est supérieure ou égale à 20Kpa, et au moins l'une des couches est réalisée à partir de PVC ;
- usiner les moyens mâles-femelles de liaison ou d'assemblage au niveau des bords du panneau permettant d'assembler plusieurs panneaux entre eux.

10. Procédé selon la revendication 9, dans lequel la sous-couche (4) de textile utilisée comprend une résistance à la compression qui est supérieure ou égale à 400KPa.

11. Procédé selon la revendication 9, dans lequel la sous-couche de textile (4) est liée à la couche d'envers (3) par calandrage, collage à froid, collage à chaud ou par poudrage de colle thermofusible.

12. Procédé selon la revendication 9, qui comprend une étape consistant à calandrer la sous-couche (4) de textile de manière à homogénéiser son épaisseur, avant de lier ladite sous-couche (4) de textile à la couche d'envers (3).

## Patentansprüche

1. Mehrschichtige Platte zur Herstellung eines Bodenbelags mit schalldämmenden Eigenschaften, bei der mindestens eine der Schichten aus PVC hergestellt ist, wobei die Platte männlich-weibliche Mittel zur Verbindung oder zum Zusammenbau mehrerer Platten untereinander umfasst, wobei die Platte mindestens eine Dekorschicht (2) umfasst, die mit einer Rückseitenschicht (3) verbunden ist, **dadurch gekennzeichnet, dass** die Rückseitenschicht (3) mit einer Unterschicht (4) aus textilem Vliesstoff verbunden ist, die dazu bestimmt ist, mit dem Boden in Kontakt zu kommen, und die eine Dicke zwischen 0,5 mm und 3 mm und eine Druckfestigkeit, gemessen nach der Norm CEN / TS 16354 : 2012, die ihrerseits auf die Norm NF EN 826 verweist, die größer oder gleich 20KPa ist.

2. Platte nach Anspruch 1, **dadurch gekennzeichnet, dass** die Unterschicht (4) aus Vliesstofftextilien eine Dicke zwischen 1 mm und 2,5 mm aufweist.

3. Platte nach Anspruch 2, **dadurch gekennzeichnet, dass** die Unterschicht (4) aus Vliesstofftextilien eine Druckfestigkeit umfasst, die größer oder gleich 100KPa ist.

4. Platte nach Anspruch 3, **dadurch gekennzeichnet, dass** die Unterschicht (4) aus Vliesstofftextilien eine Druckfestigkeit umfasst, die größer oder gleich 400KPa ist.

5. Platte nach Anspruch 1, **dadurch gekennzeichnet, dass** die Unterschicht (4) aus Vliesstofftextilien natürliche, synthetische oder synthetische Mineralfasern umfass.

6. Platte nach Anspruch 5, **dadurch gekennzeichnet, dass** die Unterschicht (4) aus Vliesstofftextilien Polyesterfasern oder Polypropylenfasern umfass.

7. Platte nach Anspruch 1, **dadurch gekennzeichnet, dass** die Unterschicht (4) aus Vliesstofftextilien ein Flächengewicht von mehr als 100 g/m² aufweist.

8. Platte nach Anspruch 1, **dadurch gekennzeichnet, dass** in der Unterschicht (4) aus Vliesstofftextilien das Verhältnis von Flächengewicht, genommen in g/m², zu Dicke, genommen in mm, größer als 200 ist.

9. Verfahren zur Herstellung einer mehrschichtigen Platte mit männlich-weiblichen Mitteln zur Verbindung oder zum Zusammenbau mehrerer Platten untereinander zur Herstellung eines Bodenbelags mit schallisolierenden Eigenschaften, **dadurch gekennzeichnet, dass** es mindestens die folgenden Schritte umfasst:
- mindestens eine Dekorschicht (2), eine Rückseitenschicht (3) und eine Unterschicht (4) aus Vliesstofftextilien in dieser Reihenfolge miteinander zu verbinden, wobei die Unterschicht (4) aus Vliesstofftextilien dazu bestimmt ist, mit dem Boden in Kontakt zu kommen, und eine Dicke zwischen 0,5 mm und 3 mm und eine Druckfestigkeit, gemessen nach der Norm CEN / TS 16354 :2012, die ihrerseits auf die Norm NF EN 826 verweist, von 20KPa oder mehr aufweist, und mindestens eine der Schichten aus PVC hergestellt ist,
- die männlich-weiblichen Verbindungs- oder Montagemittel an den Kanten des Platten bearbeiten, die es ermöglichen, mehrere Platten miteinander zu verbinden.

10. Verfahren nach Anspruch 9, **dadurch gekennzeichnet, dass** die Unterschicht (4) aus Vliesstofftextilien eine Druckfestigkeit umfasst, die größer oder gleich 400KPa ist.

11. Verfahren nach Anspruch 9, **dadurch gekennzeichnet, dass** die Unterschicht (4) aus Vliesstofftextilien mit der Rückseitenschicht (3) durch Kalandrieren, Kaltverkleben, Heißverkleben oder durch Aufpudern mit Schmelzkleber verbunden wird.

12. Verfahren nach Anspruch 9, **dadurch gekennzeichnet, dass** es einen Schritt umfasst, bei dem die Unterschicht (4) aus Vliesstofftextilien kalandriert wird, um ihre Dicke zu homogenisieren, bevor die Unterschicht (4) aus Vliesstofftextilien mit der Rückseitenschicht (3) verbunden wird.

## Claims

1. Multi-layer panel for the production of a floor covering with acoustic insulation properties, at least one of the layers of which is made from PVC, the said panel comprising male-female means for connecting or assembling several panels together said panel comprising at least one decorative layer (2) bonded to a backing layer (3), **characterized in that** the backing layer (3) is bonded to an underlayer (4) of non-woven textile, intended to be in contact with the floor, and having a thickness of between 0.5 mm and 3 mm, and a compressive strength measured in accordance with standard CEN/TS 16354: 2012 which itself refers to the NF EN 826 standard, which is greater than or equal to 20Kpa

2. Panel according to claim 1, wherein the non-woven textile underlayer (4) has a thickness between 1 mm and 2.5 mm.

3. Panel according to claim 2, wherein the nonwoven textile underlayer (4) comprises a compressive strength that is greater than or equal to 100KPa.

4. Panel according to claim 3, wherein the non-woven textile underlayer (4) comprises a compressive strength that is greater than or equal to 400KPa.

5. Panel according to claim 1, wherein the nonwoven textile underlayer (4) comprises natural, synthetic, or synthetic mineral fibers.

6. Panel according to claim 5, wherein the nonwoven textile underlayer (4) comprises polyester fibers or polypropylene fibers.

7. Panel according to claim 1, wherein the nonwoven textile underlayer (4) has a basis weight greater than 100g/m².

8. Panel according to claim 1, wherein in the non-woven textile underlayer (4) the ratio of the mass per unit area, taken in g/m², to the thickness, taken in mm, is greater than 200.

9. Method of manufacturing a multilayer panel comprising male-female means for connecting or assembling several panels together for the production of a floor covering having acoustic insulation properties, **characterised in that** it comprises at least the steps consisting of:
- bonding together, and in this order, at least one decorative layer (2), a backing layer (3) and a non-woven textile underlayer (4), the said textile underlayer (4) being intended to be in contact with the floor and having a thickness of between 0.5 mm and 3 mm and a compressive strength, measured in accordance with the CEN/TS 16354:2012 standard, which in turn refers to the NF EN 826 standard, which is greater than or equal to 20 KPa, and at least one of the layers is made from PVC;
- machining the male-female connecting or assembling means at the edges of the panel to assemble several panels together.

10. Method according to claim 9, wherein the textile underlay (4) used comprises a compressive strength that is greater than or equal to 400KPa.

11. Method according to claim 9, wherein the textile underlayer (4) is bonded to the backing layer (3) by calendering, cold bonding, hot bonding or hot melt adhesive powdering.

12. Method according to claim 9, which comprises a step of calendering the textile underlayer (4) so as to homogenize its thickness, before bonding said textile underlayer (4) to the backing layer (3).
